# FASCICULE DE BREVET EUROPEEN

(11) **EP 0 674 198 B1**
(45) Date de publication et mention de la délivrance du brevet: **21.07.1999**
(21) Numéro de dépôt: 95400629.2
(22) Date de dépôt: 22.03.1995
(51) Int. Cl.: G02B 6/40

(54) **Procédé de réalisation d'un composant de raccordement à une fibre multicoeurs**
Prozess zur Herstellung eines Bauteils zum Anschluss an eine Mehrkernfaser
Process of fabrication of a component for interconnection with a multicore fibre

(30) Priorité: 24.03.1994 FR 9403467; 28.12.1994 FR 9415775
(43) Date de publication de la demande: 27.09.1995
(73) Titulaire: FRANCE TELECOM, 75015 Paris (FR)
(72) Inventeur: Le Marer, René, F-22730 Trégastel (FR); Perrin, Gabrielle, F-22300 Ploubezre (FR)
(74) Mandataire: Martin, Jean-Jacques

(56) Documents cités:
- EP-A- 0 107 840
- EP-A- 0 137 501
- EP-A- 0 174 013
- EP-A- 0 611 973
- DE-A- 2 363 984
- DE-A- 3 541 245
- FR-A- 2 393 329
- US-A- 5 138 677
- ELECTRONICS LETTERS., vol. 27, no. 17, 15 Août 1991 STEVENAGE GB, pages 1559-1560, POOLE ET AL.
- Proceedings of the 28th International Wire and Cable Symposium, Novembre 1978, pages 370-384

## Description

La présente invention est relative à un procédé pour la réalisation d'un composant pour le raccordement de plusieurs fibres optiques individuelles sur une fibre optique multicoeur.

Les fibres optiques multicoeurs sont des guides d'ondes optiques comportant dans une même matrice linéaire une pluralité de coeurs de guidage parallèles.

Il a notamment récemment été proposé dans la demande de brevet europeen EP-A-0 611 973 ( qui constitue un document selon l'Art. 54(3) CBE) un guide optique présentant, dans une même matrice, une pluralité de coeurs, chacun entouré par une gaine optique. Les axes de ces coeurs sont disposés dans la matrice de façon à présenter entre eux des relations géométriques de grande précision, les positions respectives des axes des coeurs étant définies à quelques dixièmes de micromètres près.

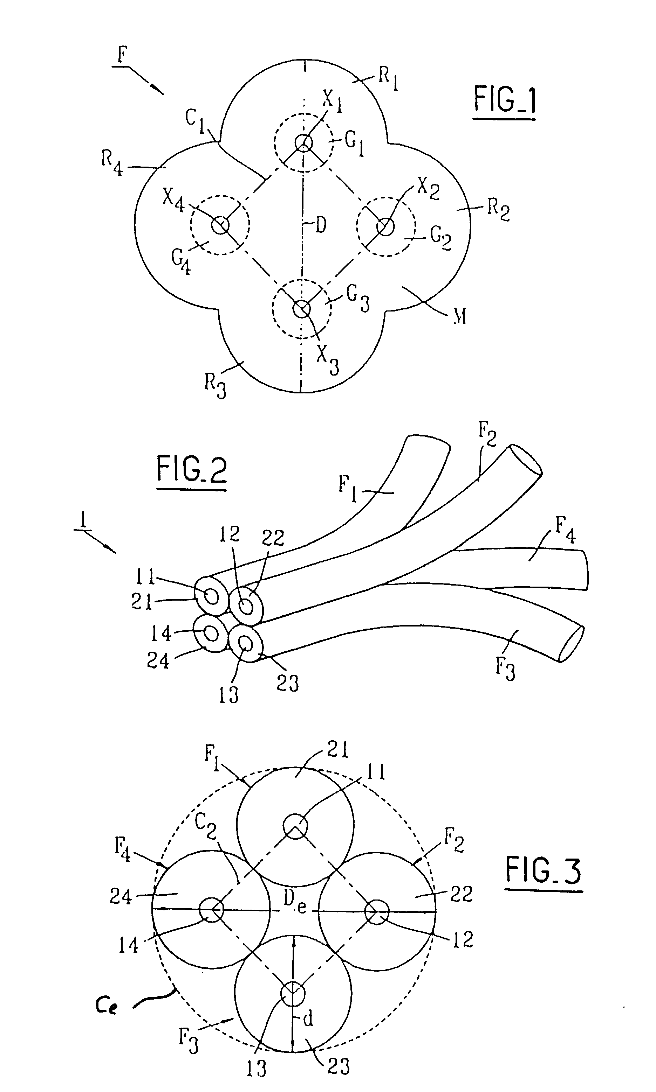

On a représenté sur la figure 1 un exemple d'une fibre optique F de ce type. Cette fibre F comporte, dans une matrice M, quatre guides optiques élémentaires G₁ à G₄ dont les axes X₁ à X₄ forment, en coupe transversale, les sommets d'un carré C₁ de grande précision. Les contours de la matrice M sont définis par quatre portions identiques R₁ à R₄ de cylindres de révolution, dont les axes coïncident respectivement avec les axes X₁ à X₄ des guides optiques élémentaires.

Cette fibre multicoeur F est par exemple de diamètre D extérieur maximal égal à 125 µm, le côté du carré C₁ que forment les axes X₁ à X₄ étant de 44 µm.

Les fibres optiques multicoeurs de ce type permettent d'envisager de remplacer les architectures du type à partage, habituellement mises en oeuvre, notamment sur les réseaux de télécommunications, par des architectures d'un coût moindre où n guides relient n abonnés. Dans les architectures du type à partage, en effet, une fibre monomode est partagée entre n abonnés et il est nécessaire de prévoir sur les réseaux des amplificateurs et coupleurs relativement onéreux. Les architectures à fibres multicoeurs permettent de faire l'économie de ces composants.

On connaît déjà par EP 137 501 un com osant pour raccorder une fibre optique multicoeurs avec une pluralité de fibres optiques élémentaires.

On connaît également par "High Density Multicore-Fiber Cable" S. Inac , T. Sato , H. Hondo , M. Ogai , S. Sentsui , A. Otake , K. Yoshizaki , K. Ishihara , N. Ushida, Proceedings of 28^{th} Intern. Wire and Cable Symposium, November 1978, pages 370-384, un composant de raccordement optique qui comprend plusieurs fibres optiques comportant chacune au moins un coeur de guidage entouré par une gaine optique, ces fibres étant réunies à une extrémité commune de façon que leurs gaines otiques soient tangentes entre elles et que les axes de leurs coeurs soient disposés selon une géométrie correspondant à celle des axes d'une fibre muticoeurs à laquelle cette extrémité commune doit être connectée, lesdites fibres étant libres les unes par rapport aux autres à leurs extrémités opposées.

Un but de l'invention est de proposer un procédé pour la réalisation d'un tel composant de raccordement.

Il est bien entendu souhaitable qu'un tel composant présente une structure de grande précision de façon à éviter des pertes de puissance entre les coeurs de la fibre multicoeur et les coeurs des fibres individuelles auxquels cette fibre multicoeur est raccordée.

A cet effet, la présente invention a pour objet un procédé de réalisation d'un composant de raccordement tel que défini à la revendication 1.

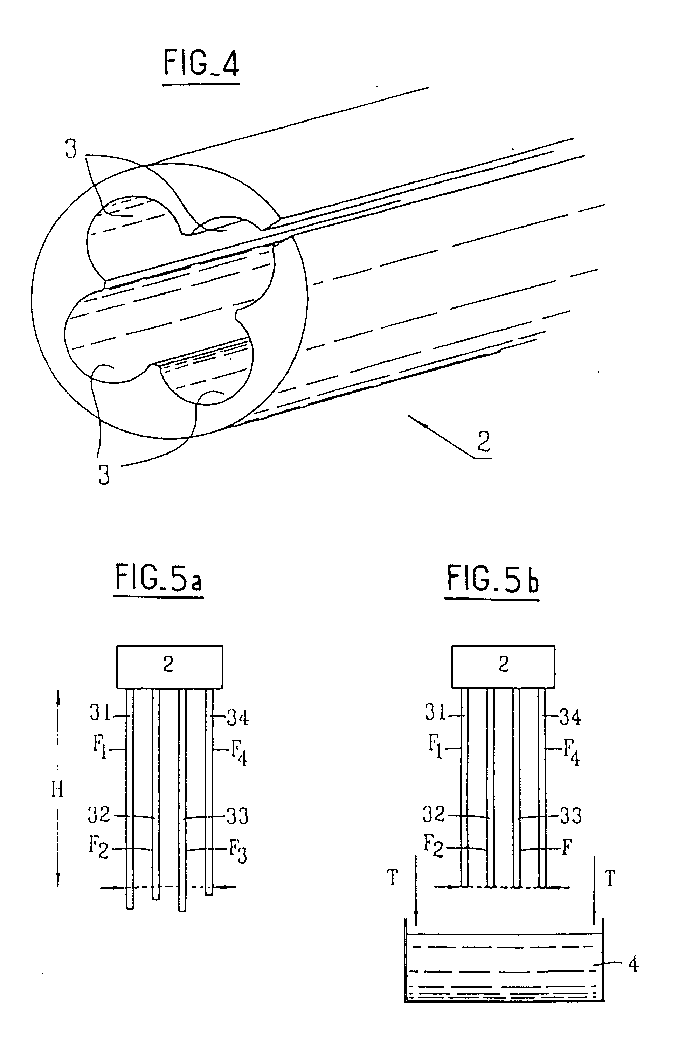

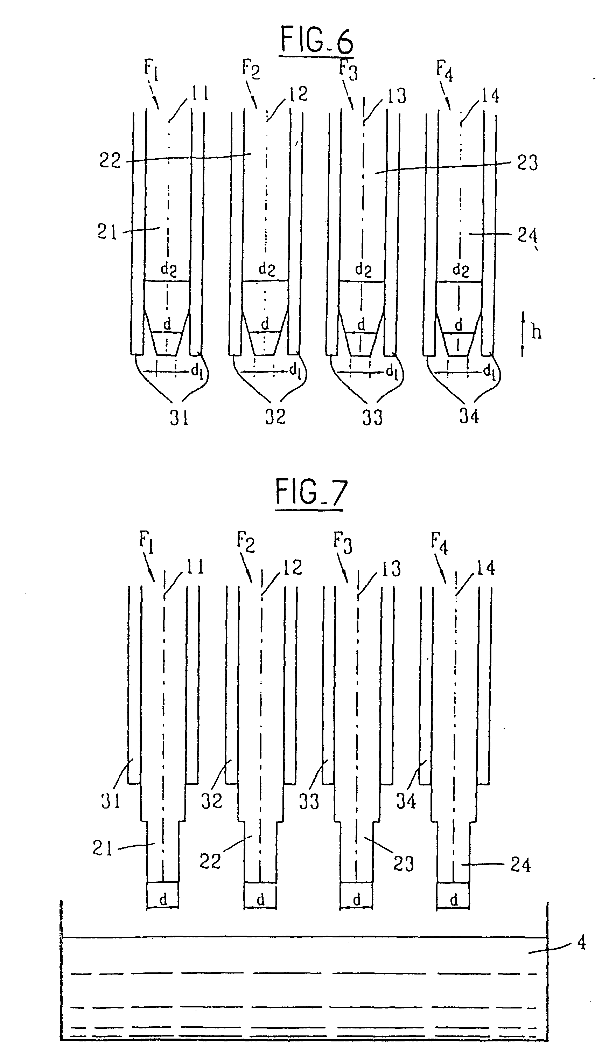

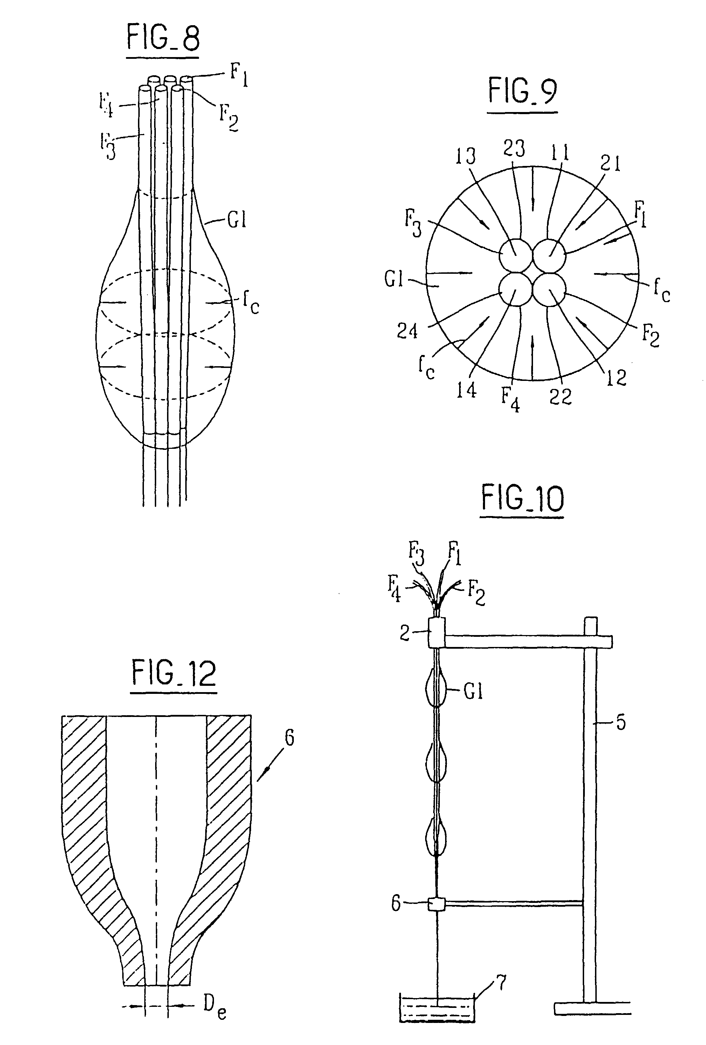

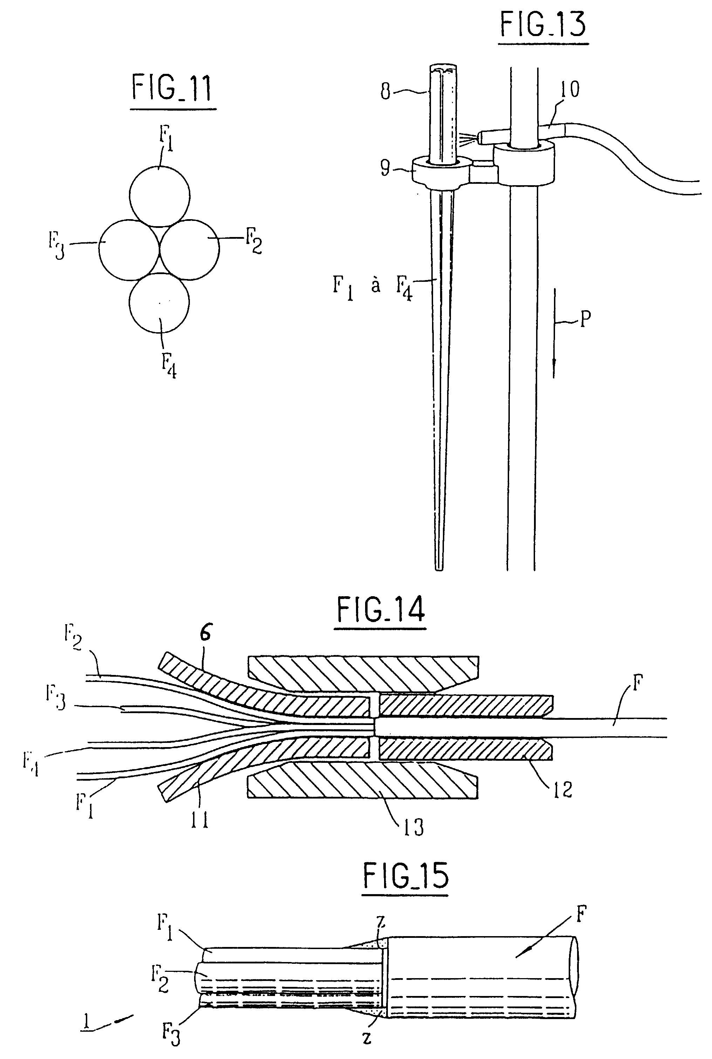

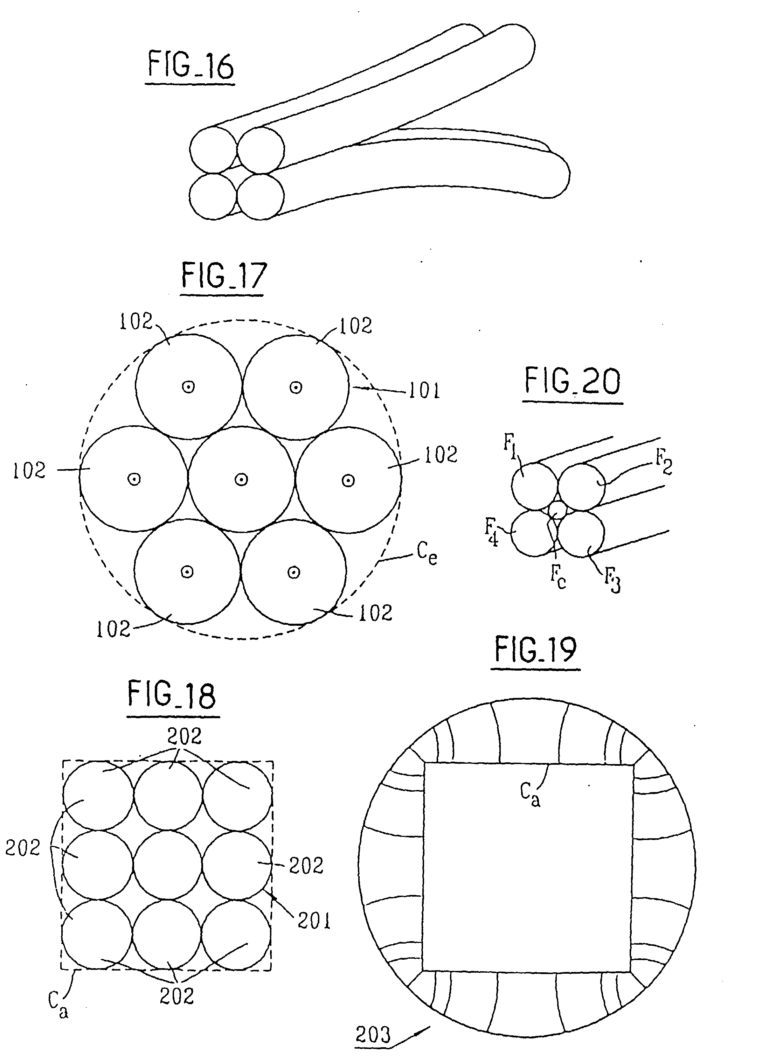

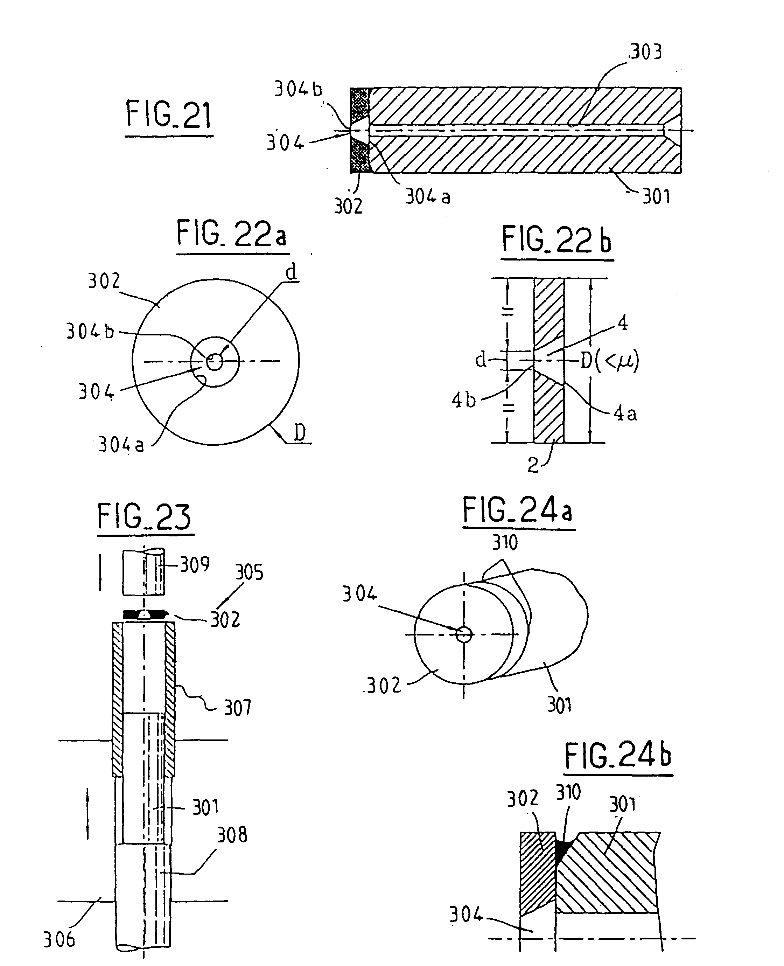

La description qui suit est purement illustrative et non limitative. Elle doit être lue en regard des dessins annexés sur lesquels :
. la figure 1 a déjà été commentée et est une vue en coupe transversale d'une fibre multicoeurs;
. la figure 2 est une vue schématique en perspective d'un composant multicoeur tel que réalisable par le procédé de l' invention ;
. la figure 3 est une vue en coupe transversale d'un composant de raccordement conforme à un mode de réalisation possible, à son extrémité destinée à être connectée à la fibre multicoeurs de la figure 1 ;
   . la figure 4 représente en perpective un jonc utilisé comme élément préinitiateur de position dans un mode de mise en oeuvre possible du procédé conforme à l'invention ;
   . les figures 5a et 5b illustrent deux étapes de ce procédé ;
   . les figures 6 et 7 illustrent deux variantes possibles permettant d'obtenir la réduction du diamètre des gaines optiques des fibres ;
   . les figures 8 à 10 illustrent les moyens mis en oeuvre selon le procédé de l'invention pour réaliser le rassemblement des fibres ;
   . la figure 11 illustre une disposition possible des fibres après rassemblement ;
   . la figure 12 représente en vue en coupe un élément initiateur de position utilisé dans un mode de mise en oeuvre possible du procédé de l'invention ;
   . la figure 13 illustre une étape de dépôt d'une gaine mécanique ;
   . la figure 14 illustre une variante possible de moyens pour la connexion d'un composant tel que réalisable par le procédé de l'invention avec une fibre multicoeur ;
   . la figure 15 illustre une autre variante possible pour la connexion d'un composant tel que réalisable par le procédé de l'invention avec une fibre multicoeur ;
   . la figure 16 illustre un composant de raccordement pour l'éclatement d'une fibre quatre coeurs en deux fibres deux coeurs ;
   . les figures 17 et 18 sont des vues en coupe analogues à la figure 3 de composants de raccordement à une fibre comportant respectivement sept et neuf coeurs ;
   . la figure 19 représente en vue de dessus l'élément initiateur utilisé, dans un mode de mise en oeuvre possible du procédé conforme à l'invention, pour réaliser le composant de la figure 18 ;
   . la figure 20 illustre une variante possible pour l'initiation de la géométrie des fibres du composant de raccordement ;
   . la figure 21 est une représentation en coupe axiale d'un élément initiateur d'un composant de raccordement ;
   . la figure 22a est une vue de face de la pastille d'extrémité du composant de la figure 21 ;
   . la figure 22b est une vue de côté de cette même pastille ;
   . la figure 23 illustre la réalisation de cet élément initiateur ;
   . la figure 24a est une représentation en perspective du composant de centrage de la figure 21, illustrant des détails de soudure entre la férule et la pastille de ce composant ;
. la figure 24b est une représentation en coupe illustrant également un détail de soudure entre la pastille et la férule du composant de la figure 21.

Le composant 1 de raccordement représenté sur les figures 2 et 3 est constitué de quatre fibres F₁ à F₄ assemblées à une extrémité commune et libres à leurs autres extrémités.

Chacune de ces fibres F₁ à F₄ comporte classiquement un coeur 11 à 14 entouré d'une gaine optique 21 à 24.

Ainsi qu'on l'a illustré sur la figure 3, les fibres F₁ à F₄ sont tangentes à leur extrémité commune, leurs axes étant disposés selon un carré C₂ de grande précision correspondant au carré C₁ de la fibre multicoeur F de la figure 1, à laquelle ce composant 1 doit être raccordé.

Par grande précision, on entend que les axes des coeurs ont des positions définies à quelques dixièmes de micromètres près.

Etant donné que le carré C₂ est de même largeur que C₁, les fibres F₁ à F₄ présentent chacune à leur extrémité commune un diamètre d de 44 µm; elles sont inscrites dans un cercle Cₑ de diamètre Dₑ égal à 106 µm.

On va maintenant décrire un mode de mise en oeuvre du procédé conforme à l'invention, pour la réalisation du composant 1 à partir de quatre fibres en silice classiques de 125 µm de diamètre de gaine optique.

On dispose dans un premier temps les quatre fibres F₁ à F₄ à assembler, revêtues de leur gaine mécanique, dans un élément préinitiateur, de façon à disposer ces fibres selon une géométrie correspondant par homothétie à la disposition finale que l'on souhaite obtenir. Cet élément initiateur est par exemple un jonc creux du type du jonc 2, qui est représenté sur la figure 4. Ce jonc 2 comporte quatre encoches 3 en arc de cylindre qui présentent chacune un diamètre correspondant au diamètre de la gaine mécanique d'une fibre.

Les fibres F₁ à F₄ sont maintenues dans ce préinitiateur 2, soit par collage, soit de façon préférée mécaniquement.

Une fois maintenues dans le préinitiateur 2, les fibres F₁ à F₄ sont, à leur extrémité opposée au préinitiateur 2, coupées à une même hauteur H dudit préinitiateur, ainsi qu'on l'a illustré sur la figure 5a, de façon que leurs extrémités à assembler coincident. Sur cette figure 5a et les figures qui suivent, les gaines mécaniques des fibres F₁ à F₄ ont été représentées et référencées de 31 à 34.

Les fibres F₁ à F₄ subissent ensuite un traitement destiné à réduire leur diamètre d'extrémité.

A cet effet, conformément à une variante particulièrement avantageuse de l'invention, les fibres F₁ à F₄ sont trempées collectivement, ainsi que l'illustrent les doubles flèches T sur la figure 5b, sans dénudage, dans un bain 4 d'attaque chimique, par exemple dans un bain d'acide fluorhydrique de 48% de concentration, pendant une durée de l'ordre de quelques minutes.

L'acide fluorhydrique attaque alors les gaines optiques 21 à 24 des fibres F₁ à F₄, en remontant par capillarité le long desdites gaines. Ainsi qu'on l'a représenté sur la figure 6, chaque fibre F₁ à F₄ ressort du bain 4 avec une gaine optique 21 à 24 présentant une forme d'extrémité sensiblement conique.

A titre d'exemple, il a été ainsi obtenu des fibres F₁ à F₄, dont les gaines optiques 21 à 24 présentent une extrémité tronconique d'une hauteur h d'environ 7 cm, s'évasant à partir d'un diamètre terminal d₁ de 20 µm jusqu'à un diamètre d₂ correspondant au diamètre de 125 µm.

Au moins une zone de ces extrémités tronconiques présente donc un diamètre égal au diamètre d de 44 µm.

La gaine mécanique 31 à 34 de chaque fibre F₁ à F₄ est ensuite enlevée soit chimiquement, soit mécaniquement, soit encore en combinant une attaque chimique et une attaque mécanique. Dans ce dernier cas, l'attaque chimique est utilisée pour séparer la gaine mécanique de la gaine optique et faciliter l'enlèvement mécanique.

Bien entendu, en variante, il est également possible de travailler directement avec des fibres dont le diamètre de 44 µm est issu du fibrage.

Egalement, ainsi qu'on la illustré sur la figure 7, on peut obtenir le diamètre de 44 µm en trempant dans un bain 4 d'acide fluorhydrique à 48 %, les extrémités dénudées des fibres F₁ à F₄, les gaines mécaniques 31 à 34 ayant préalablement été retirées à ces extrémités. Les gaines optiques 21 à 24 des fibres F₁ à F₄ subissent alors un rétrécissement cylindrique contrôlable en fontion du temps.

On notera cependant que la première variante décrite (gaines optiques d'extrémités tronconiques) ne nécessite pas un contrôle de précision du temps de trempage : il suffit en effet que le temps de trempage soit suffisant pour que le diamètre terminal des gaines optiques soit inférieur au diamètre recherché (44 µm, dans l'exemple décrit). Cette solution est donc préférée.

Ainsi qu'on l'a illustré sur les figures 8 et 9, une fois la position des fibres F₁ à F₄ préinitiée, et les extrémités des fibres éventuellement préparées de façon à ce qu'elles présentent le diamètre souhaité, elles sont rassemblées, conformément à l'invention, par dépôt d'une ou plusieurs gouttes G₁ d'un liquide présentant une tension superficielle importante. La tension superficielle f_{c} représentée par des flèches sur ces figures a pour effet de regrouper les quatre fibres F₁ à F₄.

Le liquide est choisi pour sa tension superficielle f_{c} importante et sa compatibilité avec les fibres sur lesquelles on travaille. Des exemples de liquide qui conviennent sont l'éthanol ou l'acétone. On notera que l'eau qui présente des tensions superficielles importantes est déconseillée avec les fibres en silice puisqu'elle est susceptible de les attaquer.

Ainsi qu'on l'a illustré sur la figure 10, les gouttes G₁ de liquide sont par exemple déposées sur les fibres F₁ à F₄, en une zone de celles-ci juste en dessous du jonc 2 pré-initiateur. Elles glissent par gravité vers les extrémités à rassembler des fibres F₁ à F₄.

Sur la figure 10, le jonc 2 est porté par une potence 5.

Sous l'action de la tension superficielle des gouttes, les quatre fibres F₁ à F₄ peuvent prendre deux positions d'équilibre :
- soit une position d'équilibre en carré, qui est celle souhaitée et qui est représentée sur la figure 3,
- soit une position d'équilibre en losange telle que représentée sur la figure 11.

De façon à obtenir nécessairement la géométrie en carré souhaitée, on introduit les extrémités rassemblées des fibres F₁ à F₄ dans un élément initiateur 6 porté par la potence 5 au droit de l'élément pré-initiateur 2, en dessous de celui-ci. Cet élément 6 est avantageusement, ainsi qu'on l'a représenté sur la figure 12, un capillaire de verre dont la surface intérieure présente une forme qui est de révolution et qui est évasée.

Cet élément 6 est par exemple obtenu à partir d'un capillaire cylindrique de 0,8 mm de diamètre intérieur :
- chauffé et étiré de façon à lui conférer une forme intérieure rétrécie et évasée,
- puis coupé à son extrémité rétrécie en une zone où il présente un diamètre intérieur égal de façon précise au diamètre Dₑ de 106 µm du cercle dans lequel les fibres F₁ à F₄ doivent se trouver inscrites à leur extrémité assembler.

Pour repérer de façon précise la zone du capillaire étiré qui correspond au diamètre de 106 µm, on y introduit, par son ouverture de grand diamètre, un fil métallique calibré de 106 µm de diamètre : l'extrémité du fil calibré est bloquée par le diamètre intérieur de 106 µm dudit capillaire.

On coupe alors le capillaire étiré légèrement en dessous de la zone où le fil calibré est bloqué, puis on polit, par les techniques classiques connues de l'Homme du Métier,jusqu'à atteindre le diamètre souhaité.

Les quatre fibres F₁ à F₄ assemblées par les gouttes de liquide G₁ sont introduites dans l'élément initiateur 6 ainsi obtenu, par l'extrémité évasée de celui-ci.

L'introduction des fibres F₁ à F₄ dans l'élément initiateur 6 s'accompagne d'un dépôt de gouttes d'acétone sur les fibres F₁ à F₄, de façon à maintenir lesdites fibres assemblées par tension superficielle, tout en assurant la lubrification des parois internes de l'élément initiateur 6. Les risques que les fibres ne se cassent lors de leur manipulation dans l'élément initiateur 6 sont ainsi minimisés.

Lorsque la descente des fibres dans l'élément initiateur 6 se trouve bloquée, l'opérateur soumet les quatre fibres F₁ à F₄ à de petits mouvements alternatifs de rotation, de façon à les forcer à se positionner convenablement.

Cette opération effectuée, les zones de diamètre d des gaines optiques 21 à 24 se trouvent inscrites dans le cercle de diamètre Dₑ, que définit l'ouverture de petit diamètre dudit élément initiateur 6. Les gaines optiques présentent donc nécessairement la disposition souhaitée, les axes des coeurs formant ensemble le carré C₂.

On coupe alors les fibres à une distance de quelques millimètres (2 à 4 mm) de l'ouverture de petit diamètre de l'élément initiateur 6 et on colle les fibres F₁ à F₄ à leurs extrémités en saillie par rapport audit élément initiateur 6, de façon à figer la position carrée ainsi obtenue.

Ces extrémités peuvent par exemple, ainsi qu'on l'a illustré sur la figure 10, être plongées dans une cuve 7 de colle cyanolite. La colle remonte alors par capillarité en direction de l'élément initiateur 6.

On notera que la colle cyanolite a pour propriété de sécher très rapidement, de sorte qu'elle se fige, avant d'avoir atteint l'ouverture de diamètre Dₑ de l'élément initiateur 6.

Cette opération réalisée, l'extrémité des fibres F₁ à F₄ qui dépasse de l'élément initiateur 6 est polie jusqu'au diamètre de 106 µm, ou encore, avantageusement, est laissée telle quelle, le polissage intervenant alors au moment de la connexion qui sera décrite plus loin plus en détail.

Dans une variante possible de l'invention, les fibres F₁ à F₄ sont ensuite sorties de l'élément initiateur 6. Leur assemblage à leur extrémité commune est consolidé par dépôt d'une goutte de colle cyanolite descendant le long desdites fibres F₁ à F₄.

Puis, ainsi qu'on l'a illustré sur la figure 13, on dépose sur l'extrémité des fibres un revêtement 8 de gainage mécanique. Cette opération est par exemple réalisée par descente programmée (flèche P), le long de la zone où les fibres F₁ à F₄ sont assemblées, d'une cuve 9 de dépôt (classiquement appelée par l'Homme du Métier, selon la terminologie anglosaxonne, "cuve à coating"), et de moyens 10 pour diriger en direction du dépôt un rayonnement ultraviolet de polymérisation.

Dans le cas de gaines optiques à extrémités tronconiques, on prévoit un dépôt à gradient, de façon que le composant final présente, à son extrémité où les fibres sont assemblées, une gaine mécanique 8 cylindrique de diamètre externe correspondant à celui des gaines mécaniques des fibres unitaires classiques.

Le composant 1 ainsi obtenu est donc facilement utilisable avec des moyens de connectique classiques.

A leur extrémité où elles sont libres les unes par rapport aux autres, les fibres F₁ à F₄ peuvent être chacune individuellement raccordées à une fibre optique unitaire classique, par des moyens de connectique habituels.

A son autre extrémité, on connecte le composant 1 à la fibre multicoeur F , ainsi qu'on l'a illustré sur la figure 14, par des techniques de connectique classiques mettant en oeuvre des embouts 11 et 12, et un élément de restitution de centrage 13 recevant ces embouts.

Les positions relatives de la fibre multicoeur F et du composant 1 sont ajustées de façon que les axes des coeurs du composant 1 et les axes des coeurs de la fibre multicoeur F coïncident.

On utilise avantageusement pour réaliser l'embout de connexion 11 qui termine le composant de raccordement 1, le capillaire évasé 6 qui sert d'élément initiateur.

Dans cette hypothèse, les fibres F₁ à F₄ ne sont pas sorties du capillaire 6 après collage dans leur position assemblée : une goutte de colle cyanolite est introduite par l'extrémité de plus grand diamètre du capillaire pour solidariser le capillaire 6 et les fibres F₁ à F₄.

Comme élément de restitution 13, on peut utiliser un jonc en céramique zircone-alumine, dont les ouvertures d'extrémité sont évasées, ce jonc de restitution 13 recevant de part et d'autre les embouts 11 et 12 du composant de raccordement et de la fibre multicoeur.

Un tel élément de restitution de centrage constitue avec les embouts de connexion qu'il reçoit et le composant 1, un exemple d'ensemble de raccordement selon l'invention.

En variante, on peut également utiliser comme moyens de connexion, un connecteur de fibres individuelles à maintien de polarisation, du type commercialisé par la Société RADIALL sous la dénomination "connecteur MP". On se reportera avantageusement à cet égard au catalogue RADIALL: "Connecteurs pour fibre optique-Monomode-VFO-MP"-Mars 1992. Un tel connecteur permet classiquement, d'une part, le centrage des axes de deux fibres individuelles monomodes à maintien de polarisation et, d'autre part, le réglage de la position angulaire relative de ces deux fibres autour de leur axe commun.

Utilisé avec le composant de raccordement selon l'invention et une fibre multicoeur correspondante, il permet, d'une part, le centrage des carrés C₁ et C₂, et, d'autre part, l'ajustement angulaire de ces carrés de façon que leurs axes coïncident.

En variante encore, la fibre multicoeur F et le composant 1 à quatre fibres pourront être collés, leur position relative ayant préalablement été ajustée sur des supports à rainures en V, au moyen d'appareillages permettant des mouvements de précision sur les fibres.

En variante encore, la fibre multicoeur F et le composant 1 peuvent être assemblés, ainsi qu'on l'a illustré sur la figure 15, par fusion d'une zone d'extrémité Z de la fibre multicoeur F sur l'extrémité du composant 1. On utilise pour réaliser de telles fusions de zone des appareillages à arc électrique utilisés classiquement pour le soudage de fibres.

On pourra également avantageusement mettre en oeuvre les techniques de raccordement décrites dans FR-2 632 735.

L'invention vient d'être décrite ici dans le cadre d'un raccordement à une fibre F à quatre coeurs. Elle s'applique bien entendu de façon générale à tous les raccordements à des fibres multicoeurs : raccordements de p fibres individuelles à une fibre n coeurs, ou d'une (ou plusieurs) fibre(s) p coeurs à une fibre n coeurs, avec p inférieur ou égal à n. On peut notamment également éclater une fibre quatre coeurs, ainsi qu'on l'a illustré sur la figure 16, en deux fibres deux coeurs.

A titre d'exemple complémentaire, on a illustré sur la figure 17 la section droite d'extrémité d'un composant 101 de raccordement à une fibre à sept coeurs. Six des sept fibres 102 de ce composant de raccordement 101 sont réparties autour d'une fibre centrale. Les sept fibres 102 sont tangentes deux à deux et inscrites dans un cercle Cₑ. La technique précédemment décrite pour le raccordement à une fibre quatre coeurs s'applique de la même façon, avec pour seule modification le changement du diamètre interne de l'élément initiateur.

Pour des géométries de fibres multicoeurs non circulaires, on modifie en conséquence la géométrie interne de l'élément initiateur.

Ainsi, dans le cas illustré sur la figure 18 d'un composant 201 de raccordement à une fibre à neuf coeurs, les neuf fibres 202 sont inscrites dans un carré Ca.

On utilise alors un élément initiateur 203 du type de celui représenté en vue de dessus sur la figure 19 présentant une forme intérieure évasée dont l'extrémité de petite ouverture présente un contour intérieur de section carrée Cₐ. Cette forme s'obtient aisément en introduisant dans un capillaire cylindrique de pyrex une fibre multicoeur en silice à neuf coeurs, et en chauffant et étirant ce tube de pyrex. La température de fusion du pyrex est en effet de 900°C, tandis que celle des fibres est de 2000°C, de sorte qu'il est possible d'étirer le tube sans faire varier la géométrie interne de la fibre multicoeur. On obtient, par conséquent, un initiateur dont la section rétrécie d'extrémité correspond à celle de la fibre à neuf coeurs.

On notera en outre que l'élément initiateur n'est pas indispensable. Il peut notamment être omis lorsque les fibres rassemblées n'ont qu'une seule position d'équilibre possible, ce qui est le cas par exemple pour un composant de raccordement à deux fibres. On peut également, ainsi qu'on l'a illustré sur la figure 20, disposer dans le ou les espaces entre les fibres F₁ à F₄ un fil ou une fibre F_{c} de diamètre extérieur calibré sur lequel les fibres F₁ à F₄ viennent se disposer tangentiellement lorsqu'elles sont rassemblées par les gouttes de liquide, ce fil (ou cette fibre) F_{c} calibré(e) imposant aux fibres la configuration souhaitée. Dans le cas du raccordement quatre coeurs précédemment décrit, on dispose entre les fibres F₁ à F₄ de 44 µm de diamètre de gaine optique un fil F_{c} de 18 µm de diamètre. Les fibres F₁ à F₄ se positionnent alors nécessairement en carré lorsqu'elles se rassemblent sur ce fil F_{c}.

L'invention a été décrite dans le cas de fibres en silice, mais s'applique bien entendu également à des fibres optiques plastiques.

En variante encore, l'élément initiateur est avantageusement un composant de centrage pour fibres optiques tel qu'illustré sur les figures 21 à 24, comportant une férule et une pastille calibrée qui est rapportée à une extrémité de la férule et qui présente un trou de centrage qui prolonge l'orifice de la férule.

La férule d'un tel composant n'est pas calibrée et est donc d'une fabrication peu onéreuse.

En outre, étant donné que la pastille de centrage calibrée est modulable, il est possible avec un tel composant d'utiliser un même type de férule pour réaliser différents types de centrage.

Le composant représenté sur la figure 21 comporte une férule 301 et une pastille de centrage 302 rapportée sur l'une des tranches d'extrémité de cette férule 301.

La férule 301 est un tube en céramique de forme extérieure cylindrique. Son orifice coaxial 303 n'est pas calibré et présente un diamètre de 200 µm, le diamètre extérieur de cette férule étant de 2,5 mm, avec des tolérances de ± 1/1000ième sur ces dimensions.

Cette férule 301 est par exemple réalisée par moulage.

En variante, la férule 301 peut être réalisée en d'autres matériaux ; elle peut être extrudée.

A son extrémité par laquelle les fibres sont introduites dans la férule 301, l'orifice 303 est sensiblement évasé en tronc de cône en direction de l'extérieur.

La pastille 302 est rapportée sur l'autre extrémité de la férule 301. Elle est maintenue notamment par collage sur l'interface de la férule 301.

Cette pastille 302 a été plus particulièrement représentée sur les figures 22a et 22b.

Elle est traversée coaxialement par un trou tronconique 304 dont l'ouverture de grand diamètre, référencée par 304a, est située sur la face de la pastille 302 qui est en contact avec la tranche d'extrémité de la férule 301. Son ouverture de petit diamètre est située sur la face extérieure de la pastille 302 et a été référencée par 304b.

Le contour extérieur de la pastille 302 et son trou tronconique 304 sont calibrés. Les conditions de calibrage sont par exemple les suivantes :
. le diamètre extérieur D de la pastille 302 est d'une précision inférieure au micromètre ;
. le trou tronconique 304 et le contour extérieur de la pastille 302 sont parfaitement concentriques ;
. le diamètre d de la petite ouverture 304b du trou 304 est également d'une précision inférieure au micromètre.

Dans le cas du centrage de n fibres de 125 µm de gaine optique, le diamètre D est de 2,5 mm ± 0,5 µm, le diamètre d étant de n.125 µm ± 0,5 µm.

La petite ouverture 304b de la pastille 302 présente alors une géométrie et un contour tels que les gaines optiques des fibres, à partir desquelles le composant de raccordement est réalisé, s'inscrivent nécessairement selon la disposition qu'elles doivent prendre à cette extrémité commune.

Les fibres du composant de raccordement sont rassemblées, puis sont introduites et figées dans le composant de centrage. On obtient alors, après éventuellement un polissage de l'extrémité des fibres, un composant de raccordement de fibres multicoeurs, dont l'embout de connexion est le composant de centrage qui vient d'être décrit.

Bien entendu, la petite ouverture 304b du trou 304 de la pastille 302 peut présenter d'autres géométries qu'une géométrie circulaire. Par exemple, dans le cas d'un composant de centrage utilisé pour la connectique de fibres à neuf coeurs, l'ouverture 304b sera avantageusement de géométrie carrée.

Cette pastille 302 est avantageusement réalisée en des matériaux à structure cristalline qui permettent un usinage de grande précision, tels que le saphir ou le rubis, qui sont des matériaux qui confèrent à la pastille 302 et à son orifice 304 des états de surface parfaits.

La pastille 302 peut également être usinée dans du verre ou dans toutes matières frittées métalliques ou céramiques.

En variante encore, la pastille 302 peut être réalisée par moulage en une matière plastique chargée.

Le montage du composant de la figure 21 a été illustré sur la figure 23.

On utilise pour ce montage un appareillage 305 qui comporte principalement sur un support 306 une bague fendue cylindrique de guidage 307 et deux pistons 308 et 309 qui coulissent coaxialement par rapport à cette bague fendue.

Le piston 308 introduit la férule 301 dans la bague fendue 307 dont la tranche destinée à être en contact avec la pastille 302 est préalablement encollée. Plus, le piston 309 positionne la pastille 302 sur cette tranche de la férule 301.

Lorsque la férule 301 et la pastille 302 sont collées, le piston 308 se retire de la bague fendue 307 et le composant final obtenu est éjecté.

Une fois centrée et collée, la pastille 302 peut être renforcée par un cordon annulaire de colle chargée ou non.

Egalement, ainsi qu'illustré sur les figures 24a et 24b, la pastille 302 et la tranche d'extrémité de la férule 304 peuvent être soudées en plusieurs points 310 (soudure par points au laser, par exemple).

L'appareillage 305 de la figure 23 peut être une machine automatique utilisée pour la fabrication de composants de centrage en grande série en usine. Il peut également être un outil simple de montage sur site.

Le composant de centrage qui vient d'être décrit trouve avantageusement application comme embout de connexion pour des composants de raccordement de fibres multicoeurs selon l'invention.

## Revendications

1. Procédé pour la réalisation d'un composant (1;101;201) de raccordement optique entre une fibre optique multicoeurs (F) et une pluralité de fibres optiques individuelles, du type comprenant plusieurs fibres optiques (F1 à F4;102;202) comportant chacune au moins un coeur de guidage (11 à 14) entouré par une gaine optique (21 à 24), ces fibres étant réunies les unes contre les autres et fixées latéralement les unes aux autres dans une portion d'extrémité commune de façon telle que les gaines optiques adjacentes sont tangentes entre elles, et ces fibres présentant dans leur face d'extrémité commune un diamétre présélectionné de façon telle que les axes de leurs coeurs sont situés selon une disposition correspondant à celle des axes des coeurs de ladite fibre multicoeurs (F) à laquelle leur extrémité commune doit être connectée, lesdites fibres étant libres les unes par rapport aux autres à leur extrémité opposée pour pouvoir être connectées auxdites fibres individuelles,
ledit procédé consistant en ce que:
- on juxtapose longitudinalement au moins une portion d'extrémité de plusieurs fibres optiques (F1 à F4;102;202) comportant chacune au moins un coeur de guidage (11 à 14) entouré par une gaine optique (21 à 24), lesdites fibres ayant ledit diamétre préselectionné dans au moins une section transversale desdites portions d'extrémité juxtaposées,
- on dépose sur les fibres ainsi juxtaposées dans lesdites portions d'extrémité au moins une goutte (G1) d'un liquide dont la tension superficielle rassemble les portions d'extrémités ainsi juxtaposées des gaines optiques de façon à rendre les gaines optiques adjacentes tangentes entre elles et à disposer les axes de leurs coeurs selon ladite disposition correspondant à celle des axes des coeurs de ladite fibre multicoeurs à laquelle le composant doit être connecté, et
- on fixe latéralement les unes aux autres lesdites portions d'extrémité ainsi rassemblées des gaines optiques (21 à 24), en laissant les fibres libres les unes par rapport aux autres dans les portions restantes.

2. Procédé selon la revendication 1 , caractérisé en ce que, avant de fixer les gaines (21 à 24) optiques, on introduit les gaines (21 à 24) optiques rassemblées dans un élément initiateur (6) destiné à leur conférer nécessairement ladite disposition déterminée correspondant à celle des axes des coeurs de ladite fibre multicoeurs à laquelle leur extrémité commune doit être connectée.

3. Procédé selon la revendication 2 , caractérisé en ce que l'élément initiateur est un capillaire évasé (6) qui présente à son extrémité de petite section un contour intérieur dans lequel les gaines (21 à 24) optiques des fibres (F₁ à F₄) s'inscrivent nécessairement selon ladite disposition déterminée.

4. Procédé selon l'une des revendications précédentes, caractérisé en ce que l'on fixe les gaines (21 à 24) optiques par collage dans la zone où elles sont rassemblées.

5. Procédé selon les revendications 3 et 4 prises en combinaison, caractérisé en ce que l'on colle les gaines (21 à 24) optiques dans le capillaire (6).

6. Procédé selon l'une des revendications précédentes, caractérisé en ce que, avant de rassembler les fibres dans leur portion d'extrémité commune, l'on attaque chimiquement les gaines (21 à 24) optiques pour réduire leur diamètre externe dans ladite portion d'extrémité commune.

7. Procédé selon la revendication 6, caractérisé en ce que l'on trempe les extrémités des fibres (F₁ à F₄) dans un bain d'attaque chimique.

8. Procédé selon la revendication 7, caractérisé en ce que les extrémités des fibres (F₁ à F₄) sont trempées dans un bain d'attaque chimique (4) alors qu'elles sont recouvertes d'une gaine mécanique, de sorte que les gaines (21 à 24) optiques ressortent dudit bain avec une forme sensiblement tronconique.

## Patentansprüche

1. Verfahren zur Herstellung einer Komponente (1; 101; 201) zur optischen Verbindung zwischen einer Mehrkernlichtleitfaser (F) und einer Vielzahl von einzelnen Lichtleitfasern, der Art mit mehreren Lichtleitfasern (F1 bis F4; 102; 202), welche jeweils wenigstens einen von einer optischen Hülle (21 bis 24) umgebenen Führungskern (11 bis 14) aufweisen, wobei diese Fasern miteinander verbunden und seitlich aneinander in einem gemeinsamen Endbereich derart befestigt sind, daß die optischen aneinander anstoßenden Hüllen einander tangierend sind, und wobei diese Fasern auf ihrer gemeinsamen Endseite einen derart vorgewählten Durchmesser aufweisen, daß die Achsen ihrer Kerne gemäß einer Anordnung angeordnet sind, welche derjenigen der Achsen der Kerne der Mehrkernfaser (F) entspricht, an welche ihr gemeinsames Ende angeschlossen werden soll, wobei die fasern an ihrem entgegengesetzten Ende voneinander getrennt sind, um an die einzelnen Fasern angeschlossen werden zu können,
wobei das Verfahren daraus besteht, daß:
- in Längsrichtung wenigstens ein Endbereich mehrerer Lichtleitfasern (F1 bis F4; 102; 202), welche jeweils wenigstens einen von einer optischen Hülle (21 bis 24) umgebenen Führungskern (11 bis 14) aufweisen, nebeneinandergelegt wird, wobei die Fasern den vorgewählten Durchmesser in wenigstens einem Querschnitt der nebeneinandergelegten Endbereiche aufweisen;
- auf den so in den Endbereichen nebeneinandergelegten Fasern wenigstens ein Tropfen (G1) einer Flüssigkeit aufgetragen wird, deren Oberflächenspannung die so nebeneinandergelegten Endbereiche der optischen Hüllen derart zusammenfaßt, daß die aneinander anstoßenden optischen Hüllen einander tangierend angeordnet werden und die Achsen ihrer Kerne gemäß der Anordnung angeordnet werden, welche derjenigen der Achsen der Kerne der Mehrkernfaser entspricht, an welche die Komponente angeschlossen werden soll, und
- die so zusammengefaßten Endbereiche der optischen Hüllen (21 bis 24) seitlich aneinander befestigt werden, wobei die Fasern in den übrigen Bereichen voneinander getrennt gelassen werden.

2. Verfahren gemäß Anspruch 1, dadurch gekennzeichnet, daß vor dem Befestigen der optischen Hüllen (21 bis 24) die zusammengefaßten optischen Hüllen (21 bis 24) in ein Anordnungselement (6) eingeführt werden, welches dafür bestimmt ist, ihnen notwendigerweise die bestimmte Anordnung entsprechend derjenigen der Achsen der Kerne der Mehrkernfaser zu geben, an welche ihr gemeinsames Ende angeschlossen werden soll.

3. Verfahren gemäß Anspruch 2, dadurch gekennzeichnet, daß das Anordnungselement eine konisch erweiterte Kapillare (6) ist, welche an ihrem Ende mit kleinem Querschnitt einen Innenumriß aufweist, in welchen sich die optischen Hüllen (21 bis 24) der Fasern (F1 bis F4 notwendigerweise gemäß der bestimmten Anordnung einfügen.

4. Verfahren gemäß einem der vorherigen Ansprüche, dadurch gekennzeichnet, daß die optischen Hüllen (21 bis 24) durch Verleimung in dem Bereich, wo sie zusammengefaßt sind, befestigt werden.

5. Verfahren gemäß den Ansprüchen 3 und 4 in Kombination, dadurch gekennzeichnet, daß die optischen Hüllen (21 bis 24) in der Kapillaren (6) festgeklebt werden.

6. Verfahren gemäß einem der vorherigen Ansprüche, dadurch gekennzeichnet, daß die optischen Hüllen (21 bis 24), bevor die Fasern in ihrem gemeinsamen Endbereich zusammengefaßt werden, chemisch aufgeschlossen werden, um ihren Außendurchmesser in dem gemeinsamen Endbereich zu verringern.

7. Verfahren gemäß Anspruch 6, dadurch gekennzeichnet, daß die Enden der Fasern (F1 bis F4) in ein Beizbad getaucht werden.

8. Verfahren gemäß Anspruch 7, dadurch gekennzeichnet, daß die Enden der Fasern (F1 bis F4) in ein Beizbad getaucht werden, während sie mit einer mechanischen Hülle überzogen werden, so daß die optischen Hüllen (21 bis 24) mit einer praktisch kegelstumpfartigen Form aus dem Bad herauskommen.

## Claims

1. Method of making a component (1;101;201) for optically connecting a multicore optical fibre (F) and a plurality of individual optical fibres, of the type comprising a plurality of optical fibres (F1 to F4;102;202) each having at least one guide core (11 to 14) surrounded by optical cladding (21 to 24), said fibres being held against each other and fixed laterally to each other in a common end portion so that the adjacent optical claddings are tangential to each other, and said fibres having at their common end face a preselected diameter such that the axes of their cores have a disposition corresponding to that of the axes of the cores of said multicore fibre (F) to which their common end must be connected, said fibres being free with respect to each other at their opposite end so that they can be connected to said individual fibres,
said method consisting in:
- longitudinally juxtaposing at least one end portion of a plurality of optical fibres (F1 to F4;102;202) each having at least one guide core (11 to 14) surrounded by optical cladding (21 to 24), said fibres having said preselected diameter in at least one cross section of said juxtaposed end portions,
- depositing onto the fibres juxtaposed in this way in said end portions at least one drop (G1) of a liquid whose surface tension joins together the end portions juxtaposed in this way of the optical claddings to render the adjacent optical claddings tangential to each other and to dispose the axes of their cores in said disposition corresponding to that of the axes of the cores of said multicore fibre to which the component must be connected, and
- laterally fixing said end portions of the optical claddings (21 to 24) assembled in this manner to each other, leaving the fibres free with respect to each other in the remaining portions.

2. Method according to claim 1, characterized in that before fixing the optical claddings (21 to 24), the assembled optical claddings (21 to 24) are inserted into an initiator member (6) adapted necessarily to confer upon them said particular disposition corresponding to that of the axes of the cores of said mutlicore fibre to which their common end must be connected.

3. Method according to claim 2 characterized in that the initiator member is a flared capillary (6) which has at its smaller section end an interior contour in which the optical claddings (21 to 24) of the fibres (F₁ to F₄) are necessarily inscribed with said particular disposition.

4. Method according to any one of the preceding claims, characterized in that the optical claddings (21 to 24) are fixed by gluing them in the area in which they are assembled together.

5. Method according to claim 3 in combination with claim 4, characterized in that the optical claddings (21 to 24) are glued into the capillary (6).

6. Method according to any one of the preceding claims, characterized in that, before assembling the fibres in their common end portion, the optical claddings (21 to 24) are chemically etched to reduce their outside diameter in said common end portion.

7. Method according to claim 6, characterized in that the ends of the fibres (F₁ to F₄) are dipped into a chemical etching bath.

8. Method according to claim 7, characterized in that the ends of the fibres (F₁ to F₄) are dipped into a chemical etching bath (4) when they are covered with a mechanical sheath so that the optical claddings (21 to 24) leave said bath with a substantially frustoconical shape.
